Europäisches Patentamt

European Patent Office

Office européen des brevets

(11) Numéro de publication: **0 252 785 B1**

## FASCICULE DE BREVET EUROPEEN

(45) Date de publication de fascicule du brevet:
**06.03.91**

(51) Int. Cl.5: **B01D 11/04**

(21) Numéro de dépôt: **87401308.9**

(22) Date de dépôt: **11.06.87**

(54) **Appareillage mélangeur-décanteur à goulotte noyée.**

(30) Priorité: **13.06.86 FR 8608594**

(43) Date de publication de la demande:
**13.01.88 Bulletin  88/02**

(45) Mention de la délivrance du brevet:
**06.03.91 Bulletin  91/10**

(84) Etats contractants désignés:
**AT BE CH DE ES FR GB IT LI LU NL SE**

(56) Documents cités:
**DE-C- 347 362**      **DE-C- 680 747**
**DE-C- 2 710 241**    **FR-A- 1 091 624**
**FR-A- 2 107 461**    **US-A- 2 728 457**
**US-A- 2 729 549**

(73) Titulaire: **KREBS & Cie Société anonyme**
**8 rue Jean Pierre Timbaud B.P. 68**
**F-78391 Bois D'Arcy Cédex(FR)**

(72) Inventeur: **Szanto, Istvan**
**2 Ter rue de la Cerisaie**
**F-92310 Sevres(FR)**

(74) Mandataire: **Combe, André et al**
**CABINET BEAU DE LOMENIE 55, rue d'Amsterdam**
**F-75008 Paris(FR)**

EP 0 252 785 B1

## Description

La présente invention concerne un appareillage mélangeur-décanteur à goulotte noyée.

On sait que le procédé de mélange-décantation consiste à produire une dispersion suffisamment fine des deux liquides non miscibles l'un dans l'autre pour faciliter les échanges, puis à séparer à nouveau les deux liquides non miscibles par décantation. Généralement, un des liquides est constitué par une solution impure d'un produit déterminé, tandis que l'autre liquide est un solvant organique servant soit de solvant spécifique du produit considéré, soit de support de dilution pour un échangeur d'ions spécifique du produit considéré. L'installation complète comporte habituellement une batterie d'extraction formée par la juxtaposition d'un certain nombre de mélangeurs-décanteurs dans lesquels la solution impure du produit considéré circule à contre-courant du liquide organique, puis une batterie de réextraction d'un type identique et dans laquelle le liquide organique circule à contre-courant d'une solution pure recueillant le produit, ce qui permet au liquide organique d'être utilisé en circuit fermé.

Chaque mélangeur-décanteur de la batterie comporte essentiellement un mélangeur recevant les deux produits liquides à la base et produisant leur agitation afin d'obtenir la dispersion recherchée, puis une cuve de décantation dans laquelle le mélange circule lentement et se sépare progressivement en raison même de la non-miscibilité des liquides et de la non-stabilité de la dispersion. Il est clair que, pour un débit donné, l'encombrement de chaque mélangeur dépend du temps de séjour de la dispersion avant son passage à la décantation, ce temps dépendant de l'efficacité des échanges qui augmente avec la finesse de la dispersion. De son côté, l'encombrement de chaque décanteur dépend également du temps de séjour de la dispersion qui le traverse, ce temps étant fonction de la vitesse de coalescence de la dispersion qui diminue au contraire lorsqu'on augmente la finesse de la dispersion. En conséquence, il existe toujours une taille optimum pour les gouttelettes de la dispersion qui procure l'encombrement, donc le prix minimum pour l'ensemble de l'installation.

Outre le mélangeur et la cuve de décantation, les liquides et mélanges de liquides sont véhiculés dans l'installation au moyen de pompes ou de pompes-agitateurs.

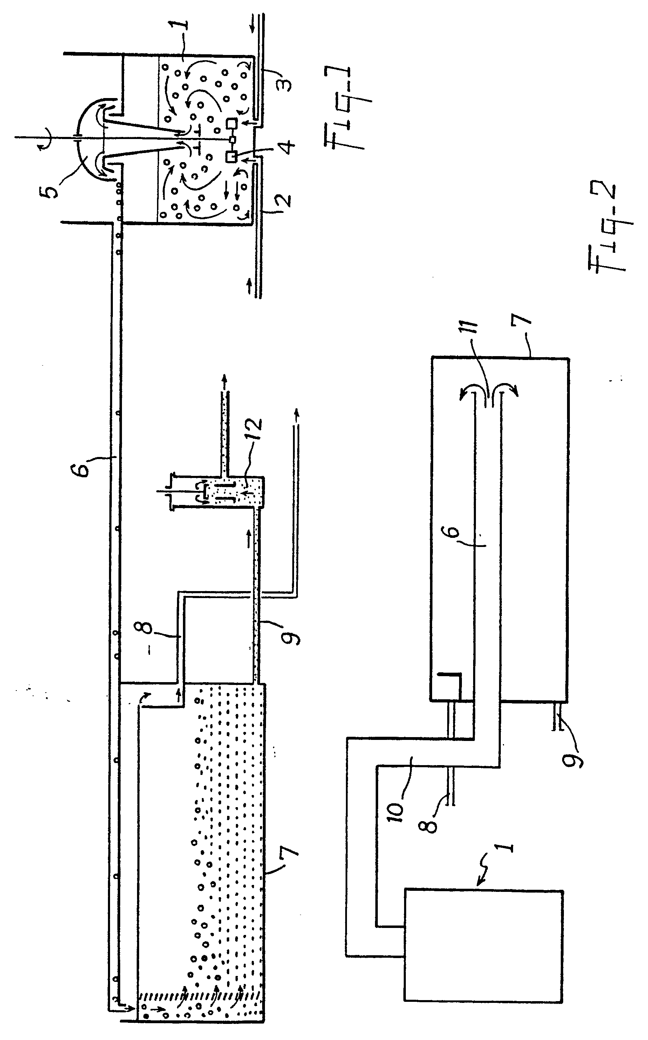

Un mélangeur-décanteur selon l'art antérieur a été schématisé sur la figure 1 ; sur cette figure on a représenté:

- en 1, le mélangeur comportant notamment des arrivées de liquides 2 et 3 et un agitateur 4
- en 5, une pompe qui assure l'élévation jusqu'à un niveau convenable du mélange réalisé dans le mélangeur
- en 6, une goulotte qui assure le transport du mélange de liquide sortant de la pompe 5 jusqu'à l'entrée dans la cuve de décantation 7 dans laquelle les deux liquides en s'écoulant à faible vitesse se séparent progressivement pour donner naissance d'une part à une phase légère (généralement organique) qui est évacuée en 8 et d'autre part à une phase lourde (généralement aqueuse) qui est évacuée en 9
- en 12, un régulateur d'interface.

On notera, et cela est une des caractéristiques essentielles des installations telles que décrites ci-dessus et par conséquent des installations auxquelles la présente invention est appliquée, que l'alimentation de la cuve de décantation 7 s'effectue par l'extrémité de ladite cuve (dite extrémité d'alimentation) qui se trouve la plus éloignée du mélangeur, ce qui a pour conséquence :

- d'une part, que l'on doive prévoir l'existence d'une goulotte 6, goulotte pouvant être très longue, afin d'assurer l'achemine-ment du mélange de liquides vers l'extrémité d'alimentation de ladite cuve,
- d'autre part,que le trajet des liquides dans la cuve de décantation 7 s'effectue en direction de la pompe 5 qui alimente la goulotte 6 ; les liquides séparés dans la cuve de décantation sortent donc de ladite cuve sur la face de celle-ci (ou au voisinage de cette face) qui se trouve la plus proche de ladite pompe 5.

De telles installations que l'on peut appeler à "courant de liquide inversé" (puisque le trajet du liquide dans la cuve de décantation s'effectue en direction de la pompe qui alimente ladite cuve de décantation) sont celles auxquelles la présente invention s'applique. Dans de telles installations, la cuve de décantation comportera donc une "face d'entrée" des liquides qui se trouve être,dans les installations connues, la plus éloignée de la pompe d'alimentation et une "face de sortie" des liquides décantés qui se trouve être la plus proche de ladite pompe.

L'étude et l'utilisation d'installations de ce type ont montré :

- d'une part que, compte tenu de l'écoulement des liquides dans la goulotte et de la longueur de ladite goulotte, il se produit déjà, en général, une certaine séparation des liquides dans ladite goulotte et que l'on est amené, si l'on veut éviter un remélange desdits liquides,lorsque ces liquides sont introduits dans la cuve de décantation, à prévoir des dispositifs spéciaux à l'extrémité de la goulotte,
- d'autre part que, pour les installations de grandes dimensions, la construction et le maintien de la goulotte posent certains problèmes difficiles.

Parailleurs, utilisation d'une goulotte immergée, pour alimenter la cuve de décantation d'un mélangeur-décanteur a été décrite dans le brevet FR 1 091 624.

Il a été trouvé et cela constitue l'idée de base de l'invention que l'on pouvait améliorer de façon notable et sur divers plans l'appareillage de mélangeur-décanteur du type de la figure 1 et l'appareillage connu par le brevet mentionné ci-dessus en utilisant une goulotte immergée -de grande longuer et de grande longuer et de grande largeur- dans la cuve de décantation.

Cette -utilisation d'une aoulotte immergée selon l'invention implique comme dans le brevet FR-A-1091624 que ladîte goulotte pénètre dans la cuve de décantation par la face de cette cuve qui a été définie ci-dessus comme étant la "face de sortie" et que les liquides décantés sortent de ladite cuve également par cette "face de sortie" (comme précédemment) ou au voisinage de cette face. On emploie l'expression "au voisinage de" car il est en effet possible de concevoir des installations dans lesquelles les liquides décantés sortiraient par la face supérieure d'une part et par la face inférieure d'autre part de ladite cuve, mais ces sorties seront toujours ménagées au voisinage immédiat de ladite "face de sortie".

Selon l'invention, on a montré que, de façon surprenante, une goulotte immergée, bien qu'occupant une partie considérable du volume du décanteur, ne perturbait pas la décantation au sein de celui-ci et servait elle-même de pré-décanteur.

La présente invention concerne donc un appareillage de mélangeur-décanteur comportant au moins un ensemble constitué d'un ou de plusieurs mélangeurs en série équipés de moyens d'agitation et de pompage, d'au moins une goulotte et d'une cuve de décantation alimentée par le courant liquide en provenance de ladite (ou lesdites) goulotte, ledit appareillage étant du type à "courant de liquide inversé" caractérisé en ce que ladite goulotte est noyée dans ladite cuve de décantation.

Elle s'étend à l'intérieur de ladite cuve sur une longueur représentant environ 80 à 95 % de la longueur de ladite cuve et occupe environ 75 à 90 % de la largeur de ladite cuve.

L'invention sera mieux comprise et illustrée en se référant à la figure 2 sur laquelle on a représenté en coupe longitudinale verticale :

- en 1, l'ensemble du système "mélangeur-pompe" tel que schématisé en 1, 2, 3, 4, 5 sur la figure 1,
- en 7, une cuve de décantation dont la forme générale est sensiblement parallélépipédique,
- en 6, la goulotte qui a la forme d'un conduit et qui comporte une arrivée 10 des liquides en provenance de l'ensemble 1 du système mélangeur-pompe et une sortie 11 située dans ladite cuve,
- en 8 et 9, les sorties respectives des phases légères et lourdes des liquides ; ces phases se sont formées durant le trajet du mélange dans la cuve de décantation.

Ainsi on appellera selon l'invention "goulotte noyée" une goulotte d'alimentation qui, pénétrant dans la cuve de décantation par une face verticale ("face de sortie") de la cuve, s'étendra dans ladite cuve sur la quasi-totalité de sa longueur, pour déboucher, à l'intérieur de ladite cuve, au voisinage immédiat de la partie interne de la face verticale opposée à la face d'entrée de ladite cuve.

D'autre part, de façon à faciliter une prédécantation du mélange des liquides dans la goulotte noyée, il est prévu selon l'invention que ladite goulotte noyée s'étende, en largeur, sur une partie notable de la largeur de la cuve.

On pouvait craindre que la présence d'une goulotte noyée de grande longueur et de grande largeur (par rapport à la longueur et à la largeur de la cuve) dans une cuve où s'effectue la séparation, par décantation, de deux liquides et par conséquent des échanges de matière entre la partie basse et la partie haute de ladite cuve gêne considérablement et freine ces échanges. Or, il a été trouvé que, dans la mesure où l'espace libre situé de part et d'autre de la goulotte (c'est-à-dire l'espace situé entre la paroi latérale de la goulotte et la paroi de la cuve lui faisant face) représenterait entre 10 et 25 % environ de la largeur totale de la cuve, les échanges de matière n'étaient pas réduits par la présence de la goulotte. Autrement dit, à condition de respecter les limites indiquées ci-dessus, les dimensions de la cuve de décantation ne devront pas être modifiées lorsque l'on dispose dans ladite cuve une goulotte immergée selon l'invention.

La hauteur de la "goulotte noyée" selon l'invention ne semble pas jouer un rôle important dans le cadre du dispositif selon l'invention. On utilisera habituellement une "goulotte noyée" dont la hauteur représente entre environ 10 % et environ 30 % de la hauteur de la cuve de décantation.

Il est tout à fait possible selon l'invention de prévoir, notamment pour les installations de grandes dimensions, que l'amenée du mélange de liquides dans la cuve s'effectue non pas par une, mais par plusieurs goulottes parallèles immergées ; dans ce cas, il convient également que l'espace libre permettant les échanges de matière représente entre environ 10 et environ 25 % de la largeur totale de la cuve.

La position de la goulotte (ou des goulottes) dans la cuve n'est pas déterminante mais, bien évidemment, il est préférable que le niveau de ladite goulotte soit très sensiblement le niveau prévu, dans ladite cuve, comme étant celui de séparation entre les deux phases des liquides.

La forme de la (ou des) goulotte est généralement (en coupe transversale) rectangulaire présentant ainsi des faces supérieures et inférieures horizontales ; il a été trouvé qu'il pouvait être souhaitable en vue de favoriser la circulation vers le bas et/ou vers le haut de phases lourdes ou légères du mélange liquide que ces faces (supérieures et/ou inférieures soient en totalité ou en partie inclinées par rapport au plan prévu de séparation des deux phases du mélange (plan horizontal). En particulier, si la goulotte est formée de faces verticales réunies entre elles par deux faces (une supérieure et une inférieure) qui sont parallèles et incli-nées vers le côté de la cuve, alors les éventuels produits lourds s'écouleront le long de la face supérieure vers la partie basse de la cuve et les produits légers s'écouleront, sur l'autre côté de la goulotte, le long de la face inférieure vers la partie haute de la cuve.

On a précédemment indiqué que,dans les installations antérieures, il se produisait déjà, durant le trajet des liquides dans la goulotte, une séparation entre les phases légère et lourde desdits liquides ; cela est également vrai lorsque l'on met en oeuvre la goulotte noyée selon la présente invention et il est souhaitable de choisir les dimensions de ladite "goulotte noyée" et les débits de liquide pour favoriser une certaine décantation dans ladite goulotte. On notera, en effet, que l'utilisation d'une "goulotte noyée" permettra de tirer parti au mieux de ce phénomène en ménageant des ouvertures (trous, fentes) sur les faces inférieures et supérieures de la goulotte dans la zone d'apparition d'une phase lourde et/ou d'une phase légère dans ladite goulotte. Grâce à ces ouvertures, les phases considérées rejoignent directement les phases correspondantes qui sont déjà soit au fond (phase lourde), soit à la partie supérieure (phase légère) de la cuve. Ceci constitue un avantage car le mélange restant dans la goulotte dispose d'une durée de séjour additionnelle pour sa séparation.

Cette prédécantation dans la goulotte avec, de préférence, élimination des liquides prédécantés par l'utilisation d'ouvertures ménagées dans les faces inférieures et supérieures de la goulotte suggère que l'on peut, selon l'invention, utiliser une goulotte dont l'aire de la section droite est variable selon la position de cette section dans la cuve. Ainsi, par exemple, si l'on veut maintenir une vitesse d'écoulement moyenne constante pour le liquide circulant d'une extrémité à l'autre de la goulotte noyée,il faudra, compte tenu d'une élimination progressive des liquides prédécantés, avoir une goulotte dont la section diminuera au fur et à mesure de l'avancement de la goulotte noyée dans la cuve de décantation.

On notera, sur le plan pratique, que grâce à la mise en oeuvre de l'invention il est tout à fait possible et parfois souhaitable de former une goulotte noyée par utilisation d'une ou plusieurs rangées de conduits immergés.

Enfin on signalera un des avantages importants de l'utilisation de la goulotte noyée : une plus grande facilité de supportage. En effet le "poids" de la goulotte est bien évidemment moindre si celle-ci se trouve dans un milieu liquide que si elle se trouve dans un milieu gazeux.

L'exemple non limitatif ci-après illustre l'invention :
- on a réalisé un mélangeur-décanteur destiné à assurer la séparation d'un mélange de deux phases non miscibles dans une proportion de 50 % environ de phase aqueuse et 50 % de phase organique ;
- après essai préliminaire, il s'est avéré que la cuve de décantation nécessaire a une longueur de 2 m, une largeur de 0,7 m et une hauteur utile de 1 m ;
- la goulotte noyée installée au niveau de 0,5 m à l'intérieur du décanteur est de section rectangulaire de 0,15 m de hauteur, de 0,55 m de largeur et de 1,7 m de longueur, avec extrémité complètement ouverte, de sorte qu'il reste dans le décanteur, de chaque côté de la goulotte, un espace de 0,075 m permettant les passages verticaux des liquides.

## Revendications

1. Appareil mélangeur-décanteur comportant au moins un ensemble constitué d'un ou plusieurs mélangeurs(1) en série, équipés de moyens d'agitation (4) et de pompage (5), au moins une cuve (7)de décantation dans laquelle s'effectue la séparation des liquides et au moins une goulotte (6) amenant le mélange de liquides desdits moyens de pompage (5) vers ladite cuve (7) de décantation , ledit appareil étant du type à "courant de liquide inversé", et la goulotte (6) étant immergée dans ladite cuve (7),caractérisé en ce que ladite goulotte (6); s'étend, à l'intérieur de ladite cuve (7), sur une longueur représentant 80 à 95% environ de la longueur de ladite cuve (7) et occupe environ 75 à 90% de la largeur de ladite cuve (7).

2. Appareil selon la revendication 1, caractérisé en ce que la hauteur de ladite goulotte immergée (6) représente 10 à 30% environ de la hauteur de ladite cuve de décantation (7).

3. Appareil selon l'une des revendications 1 ou 2, caractérisé en ce que la goulotte (6) est située sensiblement au même niveau que celui prévu de séparation des deux phases du mélange.

4.  Appareil selon l'une quelconque des revendications 1 à 3, caractérisé en ce que ladite goulotte (6) comporte sur sa face supérieure et/ou sa face inférieure des ouvertures facilitant l'évacuation des phases déjà séparées.

5.  Appareil selon l'une quelconque des revendications 1 à 4, caractérisé en ce que les faces supérieures et/ou inférieures de ladite goulotte (6) sont au moins en partie inclinées par rapport au plan prévu de séparation des deux phases du mélange.

6.  Appareil selon l'une quelconque des revendications 1 à 5, caracterisé par le fait que ladite goulotte (6) est constituée par plusieurs goulottes (6) disposées parallèlement.

## Claims

1.  Mixer-settler apparatus comprising at least one assembly constituted by one or more mixers (1) in series fitted with stirring (4) and pumping (5) means, at least one settling tank (7) in which the liquids separate, and at least one chute (6) conveying the mixture of liquids from said pumping means (5) to said settling tank (7), said apparatus being of the "reverse liquid flow" type and said chute (6) being submerged within said settling tank (7), characterized in that said chute (6) extends within said tank (7), over a length lying between about 80% and 95% of the length of said tank (7) and occupies about 75% to 90% of the width of said tank (7).

2.  Apparatus according to claim 1, characterized in that the height of said immersed chute (6) lies between about 10 to 30% of the height of said settling tank (7).

3.  Apparatus according to one of claims 1 or 2, characterized in that said chute (6) is situated at substantially the same level as the anticipated level of separation of the two phases of the mixture.

4.  Apparatus according to any one of claims 1 to 3, characterized in that said chute (6) includes openings through its top and/or bottom face facilitating the evacuation of phases already separated.

5.  Apparatus according to any one of claims 1 to 4, characterized in that the top and/or bottom faces of said chute (6) slope, at least in part, relative to the anticipated plane of separation of the two phases of the mixture.

6.  Apparatus according to any one of claims 1 to 5, characterized in that said chute (6) is constituted by a plurality of chutes (6) disposed in parallel.

## Ansprüche

1.  Mischabsetzervorrichtung, umfassend mindestens eine Gruppe bestehend aus einem oder mehreren Mischer(n) (1) in Serie, die mit Rühr- (4) und Pump-(5)-mitteln ausgestattet sind, mindestens einen Absetzkasten (7), in dem die Trennung der Flüssigkeiten erfolgt, und mindestens eine Rinne (6), die die Flüssigkeitsmischung von den Pumpmitteln (5) zum Absetzkasten (7) leitet, wobei die Vorrichtung des Typs mit "Umkehrflüssigkeitsstrom" ist und die Rinne (6) im Kasten (7) eingetaucht ist, dadurch gekennzeichnet, daß sich die Rinne (6) im Inneren des Kastens (7) über eine Länge erstreckt, die etwa 80 bis 95 % der Länge des Kastens (7) ausmacht, und etwa 75 bis 90 % der Breite des Kastens (7) einnimmt.

2.  Vorrichtung nach Anspruch 1, dadurch gekennzeichnet, daß die Höhe der eingetauchten Rinne (6) etwa 10 bis 30 % der Höhe des Absetzkastens (7) ausmacht.

3.  Vorrichtung nach einem der Ansprüche 1 oder 2, dadurch gekennzeichnet, daß sich die Rinne (6) im wesentlichen in derselben Höhe befindet, in der die Trennung der beiden Phasen der Mischung vorgesehen ist.

4.  Vorrichtung nach einem der Ansprüche 1 bis 3, dadurch gekennzeichnet, daß die Rinne (6) an ihrer Oberseite und/oder an ihrer Unterseite Öffnungen aufweist, die das Entleeren der bereits getrennten Phasen erleichtern.

5.  Vorrichtung nach einem der Ansprüche 1 bis 4, dadurch gekennzeichnet, daß die Oberseiten und/oder Unterseiten der Rinne (6) in Bezug auf die zur Trennung der beiden Phasen der Mischung vorgesehenen Ebene zumindest teilweise geneigt sind.

6.  Vorrichtung nach einem der Ansprüche 1 bis 5, dadurch gekennzeichnet, daß die Rinne (6) aus mehreren parallel angeordneten Rinnen (6) zusammengesetzt ist.

Fig-1

Fig-2